(19) Europäisches Patentamt
European Patent Office
Office européen des brevets

(11) **EP 2 028 170 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(51) Int Cl.:
*C04B 14/24* *(2006.01)*   *C04B 20/00* *(2006.01)*
*C04B 28/02* *(2006.01)*

(21) Anmeldenummer: **08014591.5**

(22) Anmeldetag: **16.08.2008**

(54) **Verfahren zur Herstellung von Leichtbeton**

Method for making light-weight concrete

Procédé de fabrication de béton léger

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**RS**

(30) Priorität: **23.08.2007 AT 13192007**

(43) Veröffentlichungstag der Anmeldung:
**25.02.2009 Patentblatt 2009/09**

(73) Patentinhaber: **Exxag Investments Limited 1070 Nikosia (CY)**

(72) Erfinder: **Rainer, Armin W.**
**1040 Wien (AT)**

(74) Vertreter: **Krause, Peter**
**Sagerbachgasse 7**
**2500 Baden (AT)**

(56) Entgegenhaltungen:
**EP-A- 1 044 938     WO-A-2006/037144**
**AT-B- 406 864       DE-A1- 4 342 996**
**DE-A1- 10 226 176   US-A- 4 110 388**

**Beschreibung**

Die Erfindung betrifft ein Verfahren zur Herstellung von Leichtbeton, insbesondere Vorort- oder Fertigteil-Leichtbeton, der aus synthetisch hergestellten Schaumglas, Schaumglas-Schotter, Blähglas oder insbesondere Glasschaumgranulat mit einem Bindemittel, vorzugsweise Wasser, Zement und gegebenenfalls Zement-Zusatzstoffen und mindestens einem Zusatzmittel besteht, wobei das synthetisch hergestellte Schaumglas, insbesondere das Glasschaumgranulat, vorzugsweise ausschließlich, aus einer Mischung von Glasmehl und Siliciumkarbid hergestellt wird, das Glasmehl und das Siliciumkarbid trocken vermischt werden und die Mischung anschließend in einem thermischen Prozess gebläht und gegebenenfalls zerkleinert wird. Ferner betrifft die Erfindung einen Leichtbeton, hergestellt nach dem erfindungsgemäßen Verfahren.

Aus der WO 2006/037144 A ist ein Leichtbeton bekannt, der aus Glasschaumgranulat mindestens einer Kornfraktion mit einem Bindemittel, vorzugsweise Zement, Bitumen oder Kunstharz, besteht. Ferner ist in diesem Dokument auch ein Verfahren zur Herstellung von Leichtbeton beschrieben.

Weiters ist es aus der EP 1 044 938 A1 bekannt, gebrochenes Schaumglas als Zuschlagsstoff für eine mit einem Bindemittel gebundene fließfähige Gussmasse zu verwenden. Dabei sollen die Zuschlagsstoffe eine der Fullerkurve angenäherte Siebkurve aufweisen. Nachteilig dabei ist, dass zur Erreichung der Korngrößen der Zuschlagsstoffe entsprechend einer Fullerkurve aufwendige Arbeitsvorgänge, wie mechanische Zerkleinerungen, notwendig sind.

Die Definition der Fullerkurve ist allgemeiner Stand der Technik und kann der einschlägigen Fachliteratur sowie den entsprechenden Normen entnommen werden.

Ferner ist aus der DE 102 26 176 A1 ein Leichtbeton aus Schaumglas, einem Bindemittel und einem Zusatzmittel bekannt. Ebenso ist der DE 43 42 996 A1 ein Schaumglasgranulat für Zement gebundenen Leichtbeton zu entnehmen.

Auch die Verwendung eines Monokorns aus gebrochenen Schaumglasbrocken als Zuschlagsstoff für Leichtbeton ist aus der EP 0 012 114 A sowie aus der JP 10 203836 A bekannt.

Weiters ist aus der EP 0 292 424 A1 bekannt, Schaumkörper aus Glasmehl und einem besonderen Aktivator herzustellen.

Nachteilig bei den oben angeführten Leichtbetonarten und deren Herstellung ist vor allem die Erzeugung des Feinanteiles, da dieser mit aufwendigen mechanischen Vorgängen durchgeführt werden muß. Ein weiterer gravierender Nachteil ist darin zu sehen, dass bei der Erzeugung des Feinanteiles schwere Umweltverschmutzungen nur durch aufwendigste Vorkehrungen vermieden werden können.

Darüber hinaus ist aus der EP 0 990 628 A1 ein Leichtmauernmörtel bekannt, der aus Blähglas, Zement, Perlit und einem Luftporenbildner besteht. Blähglas ist ein aus Blähglaskugeln bestehendes Gebilde, das in Drohrohröfen hergestellt wird. Diese Gebilde zeichnen sich durch eine weitgehend geschlossene, versinterte Oberfläche aus und eignet für Außenputz und dem Verbinden einzelner Ziegel.

Weiters ist aus der AT 406 864 B ein Leichtbeton bekannt, der insbesondere Blähtonkugeln enthält und für Mauersteine geeignet sein soll.

Schließlich sind der US-A-4 110388 ein Verfahren und eine Gussform zur Herstellung eines Isolierelementes, besonders einer Bauplatte, bekannt, die aus einem Bindemittel, insbesondere Gips, und Polystyrenkugeln besteht. Mit diesem Verfahren werden somit in einer Gussform Platten - quasi in einer B-Teilfertigung - hergestellt. Entsprechend diesem bekannten Verfahren werden, um die gewünschten feuerhemmenden Eigenschaften zu erhalten, diese Polystyrenkugeln bzw. die polymeren Körner von einem Netz oder einer Loch- oder Siebplatte fest gegeneinander gepresst, also komprimiert, während das Bindemittel, nämlich der Gips, in dickflüssiger Form zur Bildung eines Netzes mit geschlossenen Zellen, in die die Körner eingebettet sind, zugeführt wird . Aufgrund dieser Konsistenz durchdringt das Bindemittel die Kornschicht und bildet das Netz mit membran-dünnen Wänden aus unporösen Bindemittel. Dies ist insoferne von Bedeutung, da die polymeren Körner vor dem Zusetzen des Bindemittels um 3-15 % ihres Rauminhaltes komprimiert werden. Diese Verdichtung kann auch durch die Bewegung eines Stempels hervorgerufen werden.

Es ist daher Aufgabe der Erfindung einen Leichtbeton der eingangs zitierten Art zu schaffen, der einerseits die obigen Nachteile vermeidet und der andererseits rationell und wirtschaftlich mit insbesondere homogener Struktur hergestellt werden kann.

Das erfindungsgemäße Verfahren ist dadurch gekennzeichnet, dass das synthetisch hergestellte Schaumglas, insbesondere das Glasschaumgranulat, in eine Schalung eingebracht und vorzugsweise in der Schalung verdichtet wird, die befüllte Schalung an ihrer oben offenen Seite, insbesondere mit einem Gitter, abgedeckt wird und dass anschließend, vorzugsweise von unten beginnend, die Hohlräume zwischen der Körnung mit einem mindestens 20 bis 30% Luftporengehalt und einem Wasser/Zement (W/Z)-Wert bzw. einem Wasser/Bindemittel (W/B)-Wert von maximal 0,7 aufweisenden auf Tensidbasis basierenden Luftporenbildner enthaltenden Zementleim ausgefüllt werden, wobei der Zementleim mit Druck, insbesondere Injektionsdruck über einen Drucktopf, eingeleitet wird. Mit der Erfindung ist es erstmals möglich, einen Leichtbeton herzustellen, der eine durchgängige homogene Struktur besitzt, als Zuschlagstoff Glasschaumgranulat mit einer Körnung in größter Lagerungsdichte und insbesondere ein geschlossenes Gefüge aufweist und dessen Hohlräume zwischen den Glasschaumgranulatkörnern durch Zementleim ausgefüllt sind, wobei eine gleichmäßige Verteilung des Glasschaumgranulates, auch in allen Randbereichen, erreicht wird.

Der Vorteil dieses Verfahrens zur Herstellung eines derartigen Leichtbetons liegt vor allem darin, dass durch eine Abdeckung, wie einem Gitter, der Schalung ein

Aufschwimmen des Glasschaumgranulates bei der Einbringung des Zementleims unterbunden wird. Das Eindringen und das Aufsteigen des Zementleims in das Glasschaumgranulatgefüge gehen problemlos und rasch vor sich. Zudem tritt der Auftrieb nicht so stark in Erscheinung, da sich die verdichteten Glasschaumgranulatkörner miteinander verkeilen. Dadurch ergibt sich eine homogene Struktur des Leichtbetons.

Nach einem besonderen Merkmal der Erfindung wird die im thermischen Prozess hergestellte Glasschaumplatte unmittelbar nach dem thermischen Prozess mit einem gasförmigen oder flüssigen Kühlmittel schockartig behandelt, wobei eine quasi-natürliche Zerkleinerung erfolgt. Durch den gezielten Einsatz der Kühlmittel, sei es beispielsweise Luft, Wasser oder Wasserdampf kann das Brechen des den Blähofen verlassenden Materials direkt beeinflusst werden. Dabei kann das heiße Material mit dem Kühlmittel, beispielsweise in Form eines Strahles oder auch flächig, behandelt werden. Bei einem optimierten Kühlmitteleinsatz kann die gewünschte Korngröße des brechenden Glasschaumgranulates weitgehenst erreicht werden.

Gemäß einem weiteren besonderen Merkmal der Erfindung erfolgt eine Brechung der Glasschaumplatte durch die Schockbehandlung, wobei eine Siebkurve, die abweichend, insbesondere bei den kleineren Kornfraktionen stark abweichend, der Fuller-Siebkurve ist, gegeben ist. Eine Auffüllung der Hohlräume durch Glasschaumgranulat mit einer Fullersieblinie und Zementleim ist deshalb nicht wünschenswert und sinnvoll, da dann bei der Produktion das Glasschaumgranulat mechanisch kleiner gebrochen werden müsste und dadurch zwangsläufig unerwünschte Körnungen, bis zu Staub, in der Produktion anfallen würden.

Es ist auch Aufgabe der vorliegenden Erfindung einen Leichtbeton, insbesondere nach dem oben beschriebenen Verfahren, herzustellen.

Auch diese Aufgabe wird durch die Erfindung gelöst.

Der erfindungsgemäße Leichtbeton ist dadurch gekennzeichnet, dass das synthetisch hergestellte Schaumglas, insbesondere das Glasschaumgranulat, mit einem Volumenanteil am Leichtbeton von 50 bis 85%, vorzugsweise von 60 bis 75 %, enthalten ist und als Bindemittel ein Zementleim bestehend aus Wasser, Zement und/oder einem latenthydraulische Eigenschaften aufweisenden Zement-Zusatzstoff und mindestens einem Zusatzmittel, wie ein Fliessmittel und/oder einen Luftporenbildner und/oder ein Festigkeitssteigerungsmittel vorgesehen ist. Mit der Erfindung ist es erstmals möglich, einen Leichtbeton zu schaffen, der nur aus anorganischem Material besteht und keine biologischen Nährstoffe für Schimmelpilzbildung und Kleinlebewesen beinhaltet.

Ein weiterer Vorteil ist darin zu sehen, dass ein derartiger Leichtbeton einen sehr günstigen wärmeisolierenden Effekt aufweist. Dabei sollte der Zementleim mindestens 25 - 30 Vol % Luftporen beinhalten um eine geringe Wärmeleitfähigkeit zu erzielen. Zu hohe Luftporenbildung bzw. Aufschäumen des Zementleimes gefährdet andererseits die Festigkeitseigenschaften des Leichtbetons, so dass die Grenze des Hohlraumgehaltes im Zementleim mit etwa 50 % angenommen wird.

Nach einer Ausgestaltung der Erfindung ist als Zusatzmittel ein Zusatzmittel auf Polycarboxylatbasis vorgesehen. Derartige Fließmittel werden verwendet um den Frischbeton flüssiger zu machen.

Als Zusatzmittel kann "Visco Crete 1030" vorgesehen sein. Dieses unter der Markenbezeichnung der Fa. Sika am Markt angebotene Zusatzmittel wirkt neben einer verstärkenden Lufteinführung, bei niedrigeren Wasser/Zement (W/Z)-Werten insbesondere als Fließmittel, so dass die Zementsuspension sehr gut und dünnflüssig die Glasschaumgranulatkörnung umgibt.

Der Zementleim weist mindestens 20 bis 30 % Luftporengehalt und vorzugsweise einen Wasser/Zement (W/Z)-Wert bzw. einen Wasser/Bindemittel (W/B)-Wert von maximal 0,7 auf. Untersuchungen haben ergeben, dass die Luftporenbildung mit steigendem W/Z -Wert und mit fallender Temperatur begünstigt wird. Es hat sich ferner gezeigt, dass zur Erzielung von 30 % Luftporenanteil im Zementleim eine deutliche Überdosierung des Luftporenbildners notwendig ist.

Als Zusatzmittel ist ein hochkonzentrierter, auf natürlichen Harzen basierender, Luftporenbildner auf vorzugsweise Tensidbasis vorgesehen. Es hat sich in vorteilhafterweise gezeigt, dass mit einem derartigen Zusatzmittel wesentlich mehr Luftporen eingeführt werden können, ohne dass dabei die Frühfestigkeit gemindert wird.

In diesem Zusammenhang kann als Zusatzmittel "Lightcrete 02" vorgesehen sein. Dieses unter der Markenbezeichnung der Fa. Sika am Markt angebotene Zusatzmittel in Kombination mit dem Zusatzmittel "Visco Crete 1030" ergibt eine verstärkte Luftbildung bei einem sehr gut verarbeitbaren und dünnflüssigen Zementleim.

Nach einem weiteren besonderen Merkmal der Erfindung weist das unbehandelte synthetisch hergestellte Schaumglas, insbesondere das Glasschaumgranulat, einen Korndichtewert von 300 bis 370 kg/m3 und vor seiner Verarbeitung durch Verdichtung eine Schüttdichte von 180 bis 240 kg/m3, insbesondere 200 bis 220 kg/m3, auf. Die Schüttdichte wird vorzugsweise mit einer Handstampfung erreicht, wobei diese insbesondere in Holzschalungsformen durchgeführt wird. Daraus ergibt sich ein Hohlraum zwischen den Glasschaumgranulat- Körnern von etwa 31-43 Vol. % , im Mittel um 37 Vol. %. Trotz einer Schwankung der Korndichte in der Produktion, ergeben sich kontinuierliche Werte für die Leichtbeton Produktion.

Gemäß einer besonderen Ausgestaltung der Erfindung ist der Zement ein Höchstwertzement, insbesondere ein Portlandzement, vorzugsweise der Norm EN 197-1. Als Zement, beispielsweise CEM I 52,5 R (Warenbezeichnung der Rohrdorfer Zementwerke in Eiberg), sollte einer zur Verwendung kommen, der einerseits eine homogene Zusammensetzung des Zementes mit nur geringen Anteilen an Zumahlstoffen (Zusatzstoffe) besitzt und andererseits eine hohe Früh- und Endfestigkeit erreicht. Zusatzstoffe im Zement können die Eigenschaften der Zusatzmittel im Leichtbeton ändern und so zu unerwünschten Effekten beitragen, wie Veränderung des Luftporengehaltes und der Verarbeitungseigenschaften, wenn diese variieren und in größeren Mengen vorhanden sind.

Nach einem besonderen Merkmal der Erfindung weist der Leichtbeton ein geschlossenes Poren- bzw. Korngefüge auf. Ein Leichtbeton mit einem geschlossenen Korngefüge wird vor allem bei der Herstellung von monolithischen Wänden benötigt. Natürlich kann ein derartiger Leichtbeton auch für Fertigteile jeglicher Art oder Konstruktionselemente, beispielsweise Schalschutzelemente, Verwendung finden.

Es kann für die Dosierung des Luftporenbildners in Masse % bezogen auf den Zement die Formel:

$$0,1 * T(°C) - 4,15 * W/Z + 0,04 * LP + 2$$

wobei

T      Temperatur
LP     Luftporenanteil
W/Z   Wasser/Zement-Wert

Zur Berechnung nützlich sein. Aus den Versuchen hat sich gezeigt, dass eine Formel zur Berechnung der Dosierung des Luftporenbildners sehr vorteilhaft ist, wobei die Luftporeneinführung von der Temperatur und dem W/Z-Wert abhängig ist.

Auch zur Berechnung einer 28-Tage-Druckfestigkeit (DF) kann die Näherungsformel:

$$DF = 58,9 - 0,11185 * Rd + 0,000056 * Rd \char`\^ 2$$

wobei

Rd      Rohdichte des Fertigbetons in kg/m3
DF 28  Tage Druckfestigkeit (N/mm2)

herangezogen werden. Mit dieser Näherungsformel kann eine ungefähre Abschätzung der 28 Tage Druckfestigkeit errechnet werden, wobei der Zement CEM I 52.5R als Basis herangezogen wurde.

Nachstehend werden zur näheren Erläuterung der Erfindung Ausführungsbeispiele aus der Praxis aufgezeigt:

Es wurden die Versuche 1 und 2 (zur Illustration-nicht erfindungsgemäß) ohne Stabilisator durchgeführt. Diese Versuche zeigten, dass ohne Stabilisator keine vernünftigen Prüfkörper hergestellt werden können, da der Auftrieb der Glasschaumgranulatkörner extrem groß ist. Dabei steigen die Glasschaumgranulatkörner in der Zementsuspension schon ohne Rüttelverdichten auf und schwimmen auf der Suspension, wobei im unteren Drittel die Prüfkörper nur aus Suspension bestehen.

Es wurden daher Versuche 3 und 4 (zur Illustration-nicht erfindungsgemäß) mit Stabilisatoren als Zusatzmittel durchgeführt. Stabilisatoren dienen in der Betontechnologie dazu, um den Beton weniger anfällig auf Entmischung zu machen.

Es wurde beim Versuch 3 mit einem Stabilisator der Bezeichnung Addiment KW Comp.11 mit einer Dosierung von 1 % (bezogen auf das Zementgewicht) ein Versuch durchgeführt, um das Aufsteigen des Glasschaumgranulates im Zementleim zu minimieren. Es zeigte sich aber, dass durch den Stabilisator keine Verbesserung erzielt werden konnte, da die Mischungen steifer wurden und deshalb durch Rütteln verdichtet werden mussten. Mit dem Rütteln nahm auch wieder die Entmischung zu.

Ein weiterer Versuch 4 wurde mit einem erhöhten Anteil an Stabilisator durchgeführt (1,25 % Stabilisator-Zugabe). Bei dieser Zugabemenge blieb teilweise schon der Zementleim an der Mischerinnenseite hängen und der Beton war nicht weiter verarbeitbar.

Versuche 5,6 (zur Illustration) und 7,8 (erfindungsgemäß)

Da ein sinnvolles Einbringen des Leichtbetons in Formen durch übliches Mischen war wegen dem Aufschwimmen des Glasschaumgranulates nicht möglich. Daher wurden Versuche mit dem Colcrete- bzw. Prepactverfahren durchgeführt. Bei einem derartigen Verfahren wird zunächst das Glasschaumgranulat in die Schalung eingebracht, verdichtet und dann erst von unten beginnend die Hohlräume zwischen der Körnung durch die Zementleimsuspension ausgefüllt. Man benötigt dabei einen Injektionsdruck, um die Suspension in die Hohlräume einzubringen.

Der Injektionsdruck muss auch die Steighöhe und die Reibung beim Einbringen der Suspension überwinden. Es wurde eine Schalung für die Prepactversuche mit einer Höhe von 1 m, eine Breite von 0,5 m und eine Tiefe von 0,2 m gebaut. Als Schalung wurde eine 19mm starke Holzschalung verwendet.

Auf Grund des Auftriebes würde das Glasschaumgranulat über den Rand aufsteigen, weshalb an der offenen Fläche ein Gitter befestigt wurde. Der Zementleim wurde über einen Drucktopf, welcher mit 6 bar Druckluft betrieben wurde, in die Schalung eingebracht. Abgedichtet wurde die Schalung beim ersten Prepactversuch Versuch 5) mit Klebebändern, da diese aber nicht dicht waren, wurde bei den weiteren Versuchen 6, 7 und 8 mit Polyurethankitt (Sikaflex 11 FC), abgedichtet. Es musste daher der Versuch 5 abgebrochen werden, weil der Zementleim an den Fugen auslief.

Bei den Versuchen 5 bis 7 wurde der Schlauch zur Einbringung des Zementleimes von oben nach unten innerhalb des Schalkörpers geführt und erst bei dem Versuch 8 wurde der Schlauch am Bodenrand der Schalung außen angebracht.

Der Versuch 5 mit dem Colcreteverfahren musste abgebrochen werden, da, wie schon oben erwähnt, die Stoßfugen der Schalung nicht dicht waren und dadurch der Zementleim an den Fugen austrat. Der Versuch zeigte aber, dass das Eindringen und das Aufsteigen der Zementsuspension in das Glasschaumgranulatgefüge problemlos und rasch vor sich gehen. Zudem trat der vorerst berechnete Auftrieb nicht so stark in Erscheinung, da sich die verdichteten Glasschaumgranulatkörner miteinander verkeilen.

Der Ordnung halber wird erwähnt, dass das Colcrete-Verfahren zum Stand der Technik zählt und neben dem Prepakt-Verfahren eine Injektionstechnik für die Herstellung von Beton unter Wasser ist.

Beim Versuch 6 wurde dann die Schalung mit Sikaflex 11 FC abgedichtet, wobei mit der gleichen Zusammensetzung wie bei Versuch 5 gearbeitet wurde.
Die Dosierung lag bei 7 % Sikanol A33, um 30 % Luftporen im Zementleim zu erhalten. Die Verfüllung des Hohlraumes der Glasschaumgranulatkörner verlief ausgezeichnet. Es zeigte sich aber, dass mit einer derartig hohen Dosierung von Sikanol A 33 eine Verzögerung in der Anfangsfestigkeit gegeben ist und erst nach 3 Tagen eine Ausschalfestigkeit bei ca. 20° C erzielt werden konnte. Da die geringe Anfangsfestigkeit in der Praxis einen großen Mangel darstellt, musste auf ein anderes Luftporenmittel gewechselt werden.

Darauf wurde Sika Lightcrete 02 verwendet, das bei maximaler Dosierung keine verzögernde Festigkeitsentwicklung zeigte .Allerdings handelt es sich bei Sika Lightcrete nicht um ein Vinolharzprodukt, welches ein sehr stabiles Luftporensystem einbringt, sondern um ein Tensid, welches deutlich mehr zur Grobluftbildung neigt und leichter durch Schaumbildung entlüftet.

Mit der Kombination Sika Lightcrete 02 und Visco Crete 1030 konnte dann aber das erste Mal ein einwandfreier Leichtbeton hergestellt werden, welcher keine Mängel zeigte (Versuch 7). Die Frühfestigkeitsentwicklung war gut, da bei 20 ° C spätestens nach 24 h ausgeschalt werden konnte. Die Schalflächen waren glatt und mit Zementleim bedeckt.

Nach einer Woche wurde der große Prüfkörper (1 m lang) auseinander geschnitten und es zeigte sich, dass die Perimeterkörnung gleichmäßig verteilt vorlag und alle Hohlräume zwischen den Glasschaumgranulatkörnern gut ausgefüllt waren. Es wurden Bohrkerne mit einem Durchmesser von 99 mm 7 Tage nach der Betonierung entnommen und dann bis zum 28. Tag in Wasser gelagert. Durch das Bohren und Schneiden zeigten die Prüfkörper an den Druckflächen vor allem am Rand kleine Ausbrüche. Die Druckfestigkeit lag dabei im Mittel bei 4,5 N/mm2. Wenn ein Prüfkörper eine Abweichung von über 15 % vom gemeinsamen Mittel aller drei Prüfkörper zeigt, gilt der Mittelwert der beiden übrigen Prüfkörper. Es ergibt sich daher nach B 3303 und B 4710 ein Mittelwert von 4,5 N/mm2. Der W/Z Wert lag bei 0,64.

Ein weiterer Versuch 8 wurde dann noch mit einem niedrigeren W/z Wert von 0,52 durchgeführt, um zu sehen, ob das Eindringen auch bei einer zementreicheren Suspension noch gegeben ist. Auch hier war die Umhüllung der Glasschaumgranulatkörner vollständig und der Hohlraum zwischen den Körnern gut ausgefüllt. Die Druckfestigkeit nach 28 Tagen lag bei 6,9 N/mm2.

Aus obigen Versuchen wurde nachstehende Betonrezeptur als besonders gut erachtet, wobei sich aus den bisherigen Versuchen zeigt, dass im Mittel für 1 m3 Leichtbeton bei einem Luftporengehalt von 25 % im Zementleim mit zirka folgenden Gewichtsanteilen zu rechnen ist:

Zement 290 kg CEM I 52,5 R
Wasser 130 kg
Glasschaumgranulat 215 kg (= 67 Vol. % Anteil an Glasschaumgranulat im Beton)
Luftporebildner (Sika Lightcrete 02) 18 kg (abhängig von der Temperatur)

Fließmittel (Sika Viscocrete 1030) 4,5 kg
Rohdichte (Frischbeton) 658 kg/m3
28 Tage Druckfestigkeit 5 N/mm2
Luftporenanteil im Zementleim 25 %

**Patentansprüche**

1. Verfahren zur Herstellung von Leichtbeton, insbesondere Vorort- oder Fertigteil-Leichtbeton, der aus synthetisch hergestellten Schaumglas, Schaumglas-Schotter, Blähglas oder insbesondere Glasschaumgranulat mit einem Bindemittel, vorzugsweise Wasser, Zement und gegebenenfalls Zement-Zusatzstoffen und mindestens einem Zusatzmittel besteht, wobei das synthetisch hergestellte Schaumglas, insbesondere das Glasschaumgranulat, vorzugsweise ausschließlich, aus einer Mischung von Glasmehl und Siliciumkarbid hergestellt wird, das Glasmehl und das Siliciumkarbid trocken vermischt werden und die Mischung anschließend in einem thermischen Prozess gebläht und gegebenenfalls zerkleinert wird, **dadurch gekennzeichnet, dass** das synthetisch hergestellte Schaumglas, insbesondere das Glasschaumgranulat, in eine Schalung eingebracht und vorzugsweise in der Schalung verdichtet wird, die befüllte Schalung an ihrer oben offenen Seite, insbesondere mit einem Gitter, abgedeckt wird und dass anschließend, vorzugsweise von unten beginnend, die Hohlräume zwischen der Körnung mit einem mindestens 20 bis 30% Luftporengehalt und einen Wasser/Zement (W/Z)-Wert bzw. einen Wasser/Bindemittel (W/B)-Wert von maximal 0,7 aufweisenden auf natürlichen Harzen vorzugsweise auf ensidbasis basierenden Luftporenbildner enthaltenden Zementleim ausgefüllt werden, wobei der Zementleim mit Druck, insbesondere Injektionsdruck über einen Drucktopf, eingeleitet wird.

2. Verfahren nach Anspruch 1, **dadurch gekennzeichnet, dass** die im thermischen Prozess hergestellte Glasschaumplatte unmittelbar nach dem thermischen Prozess mit einem gasförmigen oder flüssigen Kühlmittel schockartig behandelt wird, wobei eine quasi-natürliche Zerkleinerung erfolgt.

3. Verfahren nach Anspruch 1 oder 2, **dadurch gekennzeichnet, dass** eine Brechung der Glasschaumplatte durch die Schockbehandlung erfolgt, wobei eine Siebkurve, die abweichend, insbesondere bei den kleineren Kornfraktionen stark abweichend, der Fuller-Siebkurve ist, gegeben ist.

4. Leichtbeton hergestellt nach dem Verfahren gemäß einem oder mehreren der Ansprüche 1 bis 3, **dadurch gekennzeichnet, dass** das synthetisch hergestellte Schaumglas, insbesondere das Glasschaumgranulat, mit einem Volumenanteil am Leichtbeton von 50 bis 85%, vorzugsweise von 60 bis 75 %, enthalten ist und als Bindemittel ein Zementleim bestehend aus Wasser, Zement und/oder einem latenthydraulische Eigenschaften aufweisenden Zement-Zusatzstoff und mindestens einem Zusatzmittel, wie ein Fliessmittel und/oder einen Luftporenbildner gemäß Anspruch 1 und/oder ein Festigkeitssteigerungsmittel vorgesehen ist.

5. Leichtbeton nach Anspruch 4, **dadurch gekennzeichnet, dass** als Zusatzmittel ein Zusatzmittel auf Polycarboxylatbasis vorgesehen ist.

6. Leichtbeton nach einem oder mehreren der Ansprüche 4 oder 5, **dadurch gekennzeichnet, dass** das unbehandelte synthetisch hergestellte Schaumglas, insbesondere das Glasschaumgranulat, einen Korndichtewert von 300 bis 370 kg/m3 und vor seiner Verarbeitung durch Verdichtung eine Schüttdichte von 180 bis 240 kg/m3, insbesondere 200 bis 220 kg/m3, aufweist.

7. Leichtbeton nach einem oder mehreren der Ansprüche 4 bis 6, **dadurch gekennzeichnet, dass** der Zement ein Höchstwertzement, insbesondere ein Portlandzement, vorzugsweise der Norm EN 197-1, ist.

8. Leichtbeton nach einem oder mehreren der Ansprüche 4 bis 7, **dadurch gekennzeichnet, dass** er ein geschlossenes Poren- bzw. Korngefüge aufweist.

**Claims**

1. Method for making light-weight concrete, in particular in-situ or precast light-weight concrete, which consists of synthetically produced foam glass, foam glass gravel, bloated glass or in particular glass foam granulate with a binder, preferably water, cement and, if necessary, cement admixtures and at least one additive, whereby the synthetically produced foam glass, in particular the glass foam granulate, is preferably produced exclusively from a mixture of glass powder and silicon carbide, the glass powder and the silicon carbide are mixed dry, and the mixture is then bloated and, if necessary, crushed in a thermal process, **characterised in that** the synthetically produced foam glass, in particular the glass foam granulate, is placed in a shuttering and preferably compacted in the shuttering, the filled shuttering is covered at its open top side, in particular using a grate, and that the voids between the grains are then filled up, preferably starting from the bottom, using a cement paste with an air void content of at least 20 to 30% and a water/cement (W/C) ratio or a water/binder (W/B) ratio of not more than 0.7 containing an air-entraining agent based, preferably on a tenside basis, on natural resins, whereby the cement paste is introduced using pressure, in particular injection pressure through a pressure pad.

2. Method in accordance with Claim 1, **characterised in that** the glass foam plate produced in the thermal process is treated in a shock-like manner immediately after the thermal process using a gaseous or fluid coolant, which results in quasi natural crushing.

3. Method in accordance with Claim 1 or 2, **characterised in that** the glass foam plate is crushed by the shock treatment, whereby a sieve curve is given that deviates, in particular in the case of smaller grain fractions strongly deviates, from the Fuller sieve curve.

4. Light-weight concrete produced in accordance with the method according to one or more of Claims 1 to 3, **characterised in that** the synthetically produced foam glass, in particular the glass foam granulate, is contained in the light-weight concrete at a volume fraction of 50 to 85%, preferably of 60 to 75%, and a cement paste consisting of water, cement and/or a cement admixture with latent hydraulic properties and at least one additive, such as a super plasticizing agent and/or an air-entraining agent in accordance with Claim 1 and/or a strength enhancer is provided as binder.

5. Light-weight concrete in accordance with Claim 4, **characterised in that** a polycarboxylate-based additive is provided as additive.

6. Light-weight concrete in accordance with one or more of Claims 4 or 5, **characterised in that** the untreated synthetically produced foam glass, in particular the glass foam granulate, has a density of solid particles of 300 to 370 kg/m3 and a bulk density of 180 to 240 kg/m3, in particular 200 to 220 kg/m3, before its processing by compaction.

7. Light-weight concrete in accordance with one or more of Claims 4 to 6, **characterised in that** the cement is a peak value cement, in particular a Portland cement, preferably of the standard EN 197-1.

8. Light-weight cement in accordance with one or more of Claims 4 to 7, **characterised in that** it is provided with a closed pore or grain structure.

**Revendications**

1. Procédé de fabrication de béton léger, notamment d'un béton léger transporté ou préfabriqué qui est composé de verre mousse de fabrication synthétique, de gravier de verre mousse, de verre expansé ou plus particulièrement de granulats de verre mousse, et d'un liant, de l'eau de préférence, de ciment et le cas échéant d'adjuvants au ciment et d'un additif au moins, le verre mousse synthétique ou plus particulièrement les granulats de verre mousse, exclusivement de préférence, étant fabriqués à partir d'un mélange de poudre de verre et de carbure de silicium, ces derniers étant mélangés à sec et le mélange étant soufflé par un processus thermique et le cas échéant concassé, **se caractérisant par le fait que** le verre mousse ou plutôt les granulats de verre mousse de fabrication synthétique sont déposés et comprimés dans un coffrage dont la partie supérieure ouverte est couverte d'une grille, et **par le fait que** le remplissage de la cavité s'effectue de préférence par le bas, entre un granulat présentant une porosité d'air allant de 20 à 30% et une pâte de ciment d'une valeur eau/ciment ou eau/liant de 0,7 maximum, sur une base de résine naturelle dont les agents tensioactifs agissent comme entraîneur, la pâte de ciment étant injectée par pression via une boîte de sécurité génératrice de pression.

2. Procédé selon la revendication 1, **caractérisé par le fait que** le panneau de verre mousse fabriqué par processus thermique et traité par choc thermique d'un réfrigérant gazeux ou liquide immédiatement après le processus thermique, ce qui entraîne une fragmentation quasi-naturelle.

**3.** Procédé selon les revendications 1 ou 2 **caractérisé par le fait que** le panneau de verre mousse casse suite au traitement de choc, produisant par là une courbe granulométrique s'écartant de la courbe granulométrique selon Fuller, et s'écartant fortement de cette courbe pour les fractions granulométriques plus fines.

**4.** Béton léger fabriqué selon le procédé conforme à une ou plusieurs revendications 1 à 3 et **caractérisé par le fait que** la fraction volumique du verre mousse de fabrication synthétique, dont notamment les granulats verre mousse est de 50% à 85% du béton léger, et de préférence de 60% à 75%, et que le liant est une pâte composée d'eau, de ciment et/ou d'un adjuvant au ciment présentant des propriétés hydrauliques latentes, et d'un additif minimum, tels qu'un additif rhéologique et/ou un entraîneur d'air conforme à la revendication 1 et/ou un stabilisateur.

**5.** Béton léger selon la revendication 4, **caractérisé par le fait qu'**un additif sur base de polycarboxylate est prévu.

**6.** Béton léger selon une ou plusieurs des revendications 4 ou 5, **caractérisé par le fait que** le verre mousse non traité, de fabrication synthétique, et dont notamment les granulats de verre mousse possèdent une finesse de grains de 300 à 370 kg/m3, et une densité en vrac des grains de 180 à 240 kg/m3 avant le traitement, et plus précisément de 200 à 220 kg/m3.

**7.** Béton léger selon une ou plusieurs revendications 4 à 6, **caractérisé par le fait que** le ciment est un ciment de qualité supérieure, et plus précisément un ciment Portland à la norme EN 197-1 de préférence.

**8.** Béton léger selon une ou plusieurs revendications 4 à 7, **caractérisé par le fait qu'**il possède une porosité ou un grain fermé.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006037144 A
- EP 1044938 A1
- DE 10226176 A1
- DE 4342996 A1
- EP 0012114 A

- JP 10203836 A
- EP 0292424 A1
- EP 0990628 A1
- AT 406864 B
- US 4110388 A